Europäisches Patentamt

European Patent Office

Office européen des brevets

(19)

(11) Veröffentlichungsnummer : **0 170 167**
**B1**

(12)

# EUROPÄISCHE PATENTSCHRIFT

(45) Veröffentlichungstag der Patentschrift :
28.09.88

(51) Int. Cl.⁴ : **B 60 J   3/00**

(21) Anmeldenummer : 85109024.1

(22) Anmeldetag : 19.07.85

(54) Sonnenblende für Fahrzeuge.

(30) Priorität : 28.07.84 DE 3427952

(43) Veröffentlichungstag der Anmeldung :
05.02.86 Patentblatt 86/06

(45) Bekanntmachung des Hinweises auf die Patenterteilung : 28.09.88 Patentblatt 88/39

(84) Benannte Vertragsstaaten :
DE FR GB IT SE

(56) Entgegenhaltungen :
EP-A- 0 079 728
EP-A- 0 099 454
DE-A- 2 730 926
DE-A- 2 911 464
DE-A- 3 045 907
FR-A- 2 429 685

(73) Patentinhaber : Gebr. Happich GmbH
Postfach 10 02 49 Clausenbrücke 1
D-5600 Wuppertal 1 (DE)

(72) Erfinder : Viertel, Lothar
Jutta von Hattstein-Strasse 41
D-6636 Berus Überherrn (DE)
Erfinder : Kaiser, Klaus Peter
Sellscheid 42
D-5632 Wermelskirchen (DE)

**Beschreibung**

Die Erfindung bezieht sich auf eine Sonnenblende für Fahrzeuge mit einem plattenförmigen Sonnenblendenkörper, der eine etwa rechteckige Umrißkontur und in einer seiner beiden Hauptflächen eine Ausnehmung aufweist, in der ein mit einem Spiegel und einer ein- und ausschaltbaren Beleuchtungseinrichtung ausgerüstetes Gehäuse eingesetzt ist, das aus einem im Sonnenblendenkörper verankerten wannenförmigen Unterteil und einem mit diesem lösbar verbundenen Oberteil besteht, wobei im Unterteil Lichtquellen installiert sind und das als Baueinheit ausgebildete Oberteil den Spiegel umfaßt.

Sonnenblenden für Fahrzeuge mit einem Spiegel und einer Beleuchtungseinrichtung auszurüsten, ist bekannt (vgl. z. B. DE-A-2 730 926). Bei dieser bekannten Sonnenblende besteht aber nicht die Möglichkeit, die Beleuchtungseinrichtung individuell zu bedienen. Vielmehr ist die Lichtquelle der Beleuchtungseinrichtung permanent eingeschaltet, wenn sich der Sonnenblendenkörper in seiner einen Blendschutz bietenden Gebrauchslage befindet. Auch weist die bekannte Sonnenblende der hier in Rede stehenden Art keine Spiegelabdeckung auf, was aber häufig erwünscht ist. Eine andere bekannte Sonnenblende (vgl. DE-A-3 045 907), die mit einem Spiegel ausgerüstet ist, bietet zwar die Möglichkeit, den Spiegel bei Nichtgebrauch abzudecken, jedoch fehlt hier eine Beleuchtungseinrichtung, so daß der Spiegel bei Dunkelheit nicht benutzt werden kann.

Es ist Aufgabe der vorliegenden Erfindung, eine Sonnenblende der eingangs erwähnten Art zu schaffen, die die Vorteile der bekannten Sonnenblenden in sich vereinigt, die einfach und kostengünstig herzustellen ist und die sich darüber hinaus durch eine einfache Bedienbarkeit und durch eine ästhetisch ansprechende Gestaltung auszeichnen soll.

Gemäß der Erfindung wird diese Aufgabe dadurch gelöst, daß im Unterteil Schalter für die Lichtquellen installiert sind und daß das Oberteil eine verschiebbare Abdeckung für den Spiegel, Leuchtfenster sowie Durchlaßöffnungen für die Schalter umfaßt.

Eine solche erfindungsgemäß ausgebildete Sonnenblende besitzt Vorteile in verschiedener Hinsicht. So ist es von Vorteil, daß die Lichtquellen und die Schalter im Unterteil angeordnet sind, weil sich hierdurch die Herstellung der elektrischen Verbindungen komplett und übersichtlich realisieren läßt, und zwar bevor das Oberteil mit dem Unterteil verbunden wird. Die Anordnung von Schaltern ermöglicht zudem die individuelle Inbetriebnahme der Beleuchtungseinrichtung. Von wesentlicher Bedeutung ist weiterhin die Maßnahme, das Oberteil als komplett vormontierbare, den Spiegel, die verschiebbare Abdeckung für diesen, die Leuchtfenster sowie die Durchlaßöffnungen für die Schalter umfassende Baueinheit auszubilden, weil sich hierdurch die Herstellung der Sonnenblende beträchtlich vereinfacht.

Die lösbare schnell und einfach herzustellende Verbindung der Gehäuseteile kann dadurch realisiert werden, daß das Unterteil an zwei einander gegenüberliegenden Wandungsseiten Rastausnehmungen und das Oberteil in die Rastausnehmungen eingreifende Klipsnasen aufweist.

Eine vorteilhafte Ausgestaltung der Erfindung besteht darin, daß die Leuchtfenster unmittelbar über den Lichtquellen angeordnet sind und daß ein Leuchtfenster als Punktstrahler (Linse) ausgebildet ist. Weiterhin kann vorgesehen sein, daß die den Leuchtfenstern zugeordneten Lichtquellen unabhängig voneinander ein bzw. ausschaltbar sind. Eines der Leuchtfenster als Punktstrahler auszubilden, eröffnet nun die Möglichkeit, die Beleuchtungseinrichtung der Sonnenblende nicht nur für die Benutzung des Spiegels bei Dunkelheit zu verwenden, sondern diese auch als Leseleuchte einzusetzen, was wohl nicht nur von Taxifahrern als angenehm empfunden werden wird.

Die verschiebbare Abdeckung des Spiegels ist in seitlichen Nuten des Oberteils hin- und herbeweglich geführt und die größte Öffnungsweite der Abdeckung ist durch einen Anschlag begrenzt. Dabei ist insbesondere vorgesehen, daß an der Abdeckung eine Feder angreift, die durch das Überführen der Abdeckung aus der geöffneten in die geschlossene Lage spannbar ist, daß die Abdeckung in der geschlossenen Lage durch einen in eine Öffnung derselben einrastbaren federbelasteten Zapfen gehalten ist und daß die Abdeckung durch ein Zurückschieben des federbelasteten Zapfens durch die Kraft der gespannten Feder in die geöffnete Lage überführbar ist. Durch Lösen des federbelasteten Zapfens, wozu die Abdeckung mit einem gegen das freie Ende des federbelasteten Zapfens bewegbaren Betätigungsknopf ausgerüstet sein kann, bewegt sich die Abdeckung automatisch vom Spiegel weg und gibt diesen zur Einblicknahme frei.

Um der Forderung nach einer einfachen und kostengrünstigen Herstellbarkeit der neuen Sonnenblende auch im Detail gerecht zu werden, ist die an der Abdeckung angreifende Feder eine Zugfeder, die vorzugsweise aus einer Gummischnur besteht. Dabei ist zweckmäßigerweise ein Ende der Zugfeder am oberen, rückseitigen Randbereich der Abdeckung und das andere Ende spiegelrückseitig am Oberteil befestigt, derart, daß sich der Spiegel, bei gespannter Zugfeder, zwischen den Federsträngen befindet.

Ein Ausführungsbeispiel der Erfindung wird nachfolgend anhand der Zeichnung näher erläutert. Es zeigen :

Fig. 1 die Sonnenblende in einer Draufsicht mit geschlossener Spiegelabdeckung,

Fig. 2 eine der nach Fig. 1 entsprechende Ansicht der Sonnenblende mit geöffneter Spiegelabdeckung,

Fig. 3 eine Teilansicht des Sonnenblendenkörpers mit integriertem Unterteil des Gehäuses,

Fig. 4 das zum Unterteil nach Fig. 3 gehörende Oberteil des Gehäuses,

Fig. 5 einen Vertikalschnitt durch das Gehäuse mit Spiegel und Abdeckung und

Fig. 6 im vergrösserten Maßstab die Auslösemechanik für die Abdeckung.

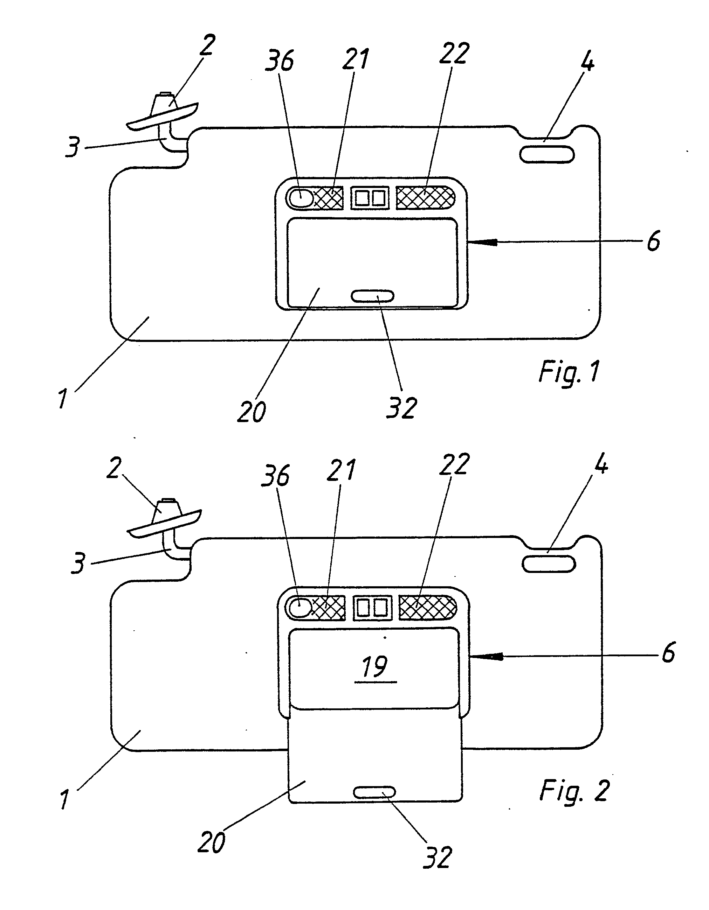

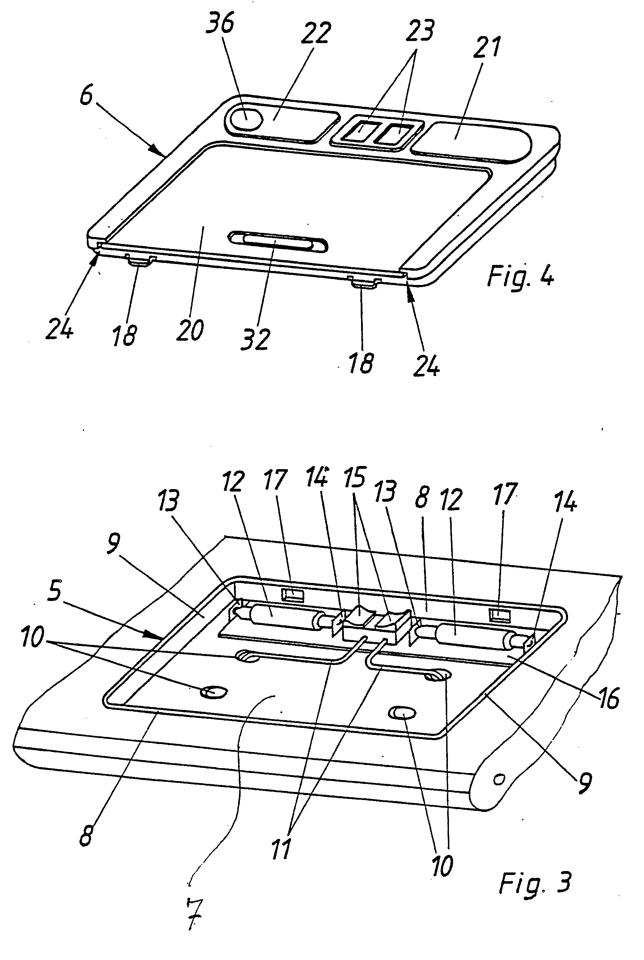

In den Fig. 1 und 2 ist eine übliche Sonnenblende gezeigt, die aus einem Sonnenblendenkörper 1 mit einem Schwenklager 2, einer Schwenklagerachse 3 und einer Gegenlagerachse 4, die lösbar in ein nicht dargestelltes Gegenlagergehäuse eingreift, besteht. Der Sonnenblendenkörper 1 ist plattenförmig ausgebildet (vgl. auch Fig. 3) und weist eine etwa rechteckige Umrißkontur auf.

In einer Breitseite des Sonnenblendenkörpers 1 ist eine Aussparung eingearbeitet, in der das Unterteil 5 eines aus Unterteil 5 und Oberteil 6 bestehenden Gehäuses verankert ist. Wie Fig. 3 zeigt, weist das Unterteil 5 einen Boden 7 und paarweise einandergegenüberliegende Seitenwandungen 8 bzw. 9 auf. Im Boden 7 sind Durchbrüche 10 zum Durchführen von elektrischen Leitern 11 vorgesehen. Die elektrischen Leiter stehen einendig mit der Fahrzeugelektrik in Kontakt, wobei die Kontaktierung über die Schwenklagerachse 3 und/oder Gegenlagerachse 4 in bekannter und daher hier nicht näher zu beschreibender Weise erfolgen kann. Die anderen Enden der elektrischen Leiter 11 sind an Soffittenlampen 12 tragenden Kontakten 13, 14 unter Zwischenschaltung von Ausschaltern 15 angeschlossen. Die Kontakte 13, 14 und Schalter 15 sind auf einer Bodenplatte 16 mit der zugehörigen Verdrahtung vormontiert, so daß die Endmontage sich auf das Einsetzen der Bodenplatte 16 in das Unterteil 5, das Einklemmen der Soffittenlampen 12 zwischen die Kontakte 13, 14 und das Anklemmen der elektrischen Leiter 11 beschränkt. Wie Fig. 3 weiterhin zeigt, weisen die Seitenwandungen 8 Rastausnehmungen 17 auf, die zum Einrasten von am Oberteil 6 angeordneten Klipsnasen 18 dienen. Das wannenartig ausgebildete Unterteil 5 besitzt eine etwa rechteckige Umrißkontur und ist als Kunststoff-Spritzgußteil hergestellt.

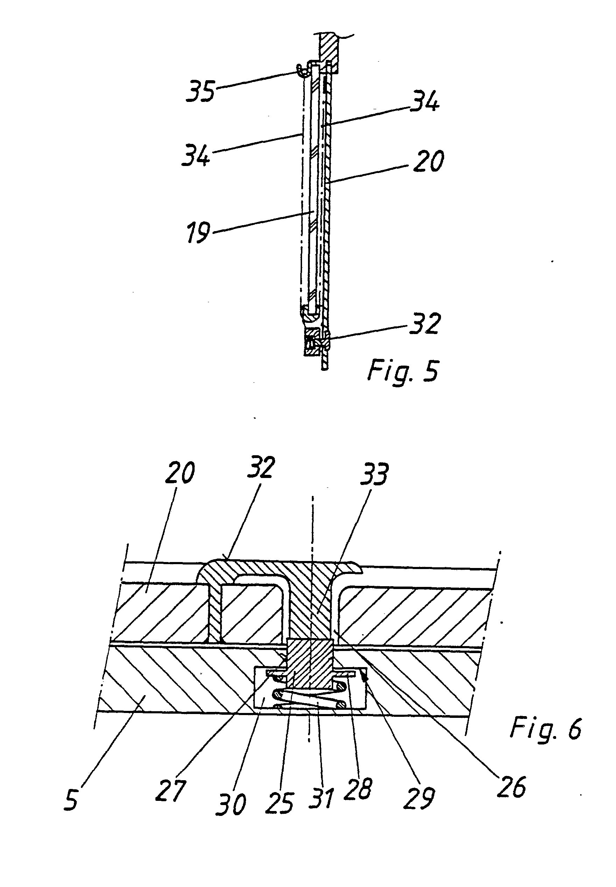

Das Oberteil 6 des Gehäuses stellt eine fertig vormontierbare Baueinheit dar, die im einzelnen einen Make-up-Spiegel 19 (vgl. Fig. 2 und 5), eine verschiebbare Abdeckung 20 für den Spiegel 19, Leuchtfenster 21 und 22 sowie Durchlaßöffnungen (23) für die Schalter 15 aufweist. Das Oberteil 6 ist ebenso wie das Unterteil 5 als Kunststoff-Spritzgußteil ausgebildet.

Die Abdeckung 20, die ebenfalls aus einem Kunststoffspritzgußteil besteht, ist in Führungen 24 des Oberteils 6 verschiebbar aufgenommen. Die Abdeckung 20 kann aus einer den Spiegel 19 gänzlich abdeckenden geschlossenen Endlage (Fig. 1) in eine den Spiegel 19 gänzlich freigebende, geöffnete Endlage (Fig. 2) überführt werden, in welch letztere er die untere Randkante des Sonnenblendenkörpers 1 überragt. Die geöffnete Endlage der Abdeckung 20 ist durch einen, im einzelnen nicht dargestellten Endanschlag definiert.

In der geschlossenen Endlage ist die Abdeckung 20 durch einen federbelasteten Zapfen 25, der in eine als Durchgangsbohrung ausgebildete Öffnung 26 der Abdeckung 20 eingreift, gehalten. Der Zapfen 25 durchsetzt eine Bohrung 27 im Unterteil 5, stützt sich mit einem angeformten Flansch 28 gegen die Stirnwand 29 einer Bohrungserweiterung 30 ab und trägt auf seinem den Flansch 28 überragenden Ende eine Schraubendruckfeder 31, die den Zapfen 25 nach außen, d. h. in Richtung zur Abdeckung 20 hin, belastet. Die Abdeckung 20 trägt einen Betätigungsknopf 32, der mit einem Zapfen 33 die Öffnung 26 durchgreift. Durch Druckausübung auf den Betätigungsknopf 32 wird der Zapfen 25 gegen die Kraft der Feder 31 aus der Öffnung 26 herausbewegt und damit die Arretierung der Abdeckung 20 aufgehoben.

Die Abdeckung 20 soll bei einer Beaufschlagung des Betätigungsknopfes 32 sich selbsttätig in die geöffnete Position bewegen. Hierfür ist an der Rückseite der Abdeckung 20, und zwar am oberen Randbereich derselben, eine vorzugsweise aus einem Gummizug bestehende Zugfeder 34 einendig befestigt. Das andere Ende der Zugfeder ist um den unteren Rand des Spiegels 19 herumgeführt und am oberen Randbereich des Spiegels 19 an einer hier vorgesehenen Öse 35 befestigt. Die Zugfeder 34 ist in der offenen Lage der Abdeckung 20 entspannt und wird beim Überführen der Abdeckung in die geschlossene Lage gespannt, in der dann die Zugfeder die aus Fig. 5 ersichtliche Position, in der sich der Spiegel 19 zwischen den Federsträngen befindet, einnimmt.

Es ist noch zu erwähnen, daß ein Leuchtfenster mit einer einen Punktstrahler 36 bildenden Linse ausgebildet ist, so daß die Beleuchtungseinrichtung wahlweise als Beleuchtung oder als Leselampe benutzt werden kann.

## Patentansprüche

1. Sonnenblende für Fahrzeuge mit einem plattenförmigen Sonnenblendenkörper (1), der eine etwa rechteckige Umrißkontur und in einer seiner beiden Hauptflächen eine Ausnehmung aufweist, in der ein mit einem Spiegel (19) und einer ein- und ausschaltbaren Beleuchtungseinrichtung ausgerüstetes Gehäuse (5, 6) eingesetzt ist, das aus einem im Sonnenblendenkörper (1) verankerten wannenförmigen Unterteil (5) und einem mit diesem lösbar verbundenen Oberteil (6) besteht, wobei im Unterteil (5) Lichtquellen (12) installiert sind und das als Baueinheit ausgebildete Oberteil (6) den Spiegel (19) umfaßt, dadurch gekennzeichnet, daß im Unterteil (5) Schalter (15) für die Lichtquellen (12) installiert sind und daß das Oberteil (6) eine verschiebbare Abdeckung (20) für den Spiegel (19), Leuchtfenster (21, 22) sowie Durchlaßöffnungen (23) für die Schalter umfaßt.

2. Sonnenblende nach Anspruch 1, dadurch gekennzeichnet, daß das Unterteil (5) an zwei einander gegenüberliegenden Wandungsseiten (8) Rastausnehmungen (17) und das Oberteil (6) in die Rastausnehmungen (17) eingreifende Klipsnasen (18) aufweist.

3. Sonnenblende nach Anspruch 1 oder 2, dadurch gekennzeichnet, daß die Leuchtfenster (21, 22) unmittelbar über den Lichtquellen (12) angeordnet sind und daß ein Leuchtfenster (21, 22) als Punktstrahler (36) ausgebildet ist.

4. Sonnenblende nach einem der Ansprüche 1 bis 3, dadurch gekennzeichnet, daß die den Leuchtfenstern (21, 22) zugeordneten Lichtquellen (12) unabhängig voneinander ein- bzw. ausschaltbar sind.

5. Sonnenblende nach einem der Ansprüche 1 bis 4, dadurch gekennzeichnet, daß die verschiebbare Abdeckung (20) in seitlichen Nuten (Führungen 24) des Oberteils (6) hin- und herbeweglich geführt ist und daß die größte Öffnungsweite der Abdeckung (20) durch einen Anschlag begrenzt ist.

6. Sonnenblende nach einem der Ansprüche 1 bis 5, dadurch gekennzeichnet, daß an der Abdeckung (20) eine Feder (34) angreift, die durch das Überführen der Abdeckung (20) aus der geöffneten in die geschlossene Lage spannbar ist, daß die Abdeckung (20) in der geschlossenen Lage durch einen in eine Öffnung (26) derselben einrastbaren federbelasteten Zapfen (25) gehalten ist und daß die Abdeckung (20) durch ein Zurückschieben des federbelasteten Zapfens (25) durch die Kraft der gespannten Feder in die geöffnete Lage überführbar ist.

7. Sonnenblende nach Anspruch 6, dadurch gekennzeichnet, daß die Abdeckung (20) mit einem gegen das freie Ende des federbelasteten Zapfens (25) bewegbaren Betätigungsknopf (32) ausgerüstet ist.

8. Sonnenblende nach Anspruch 6, dadurch gekennzeichnet, daß die an der Abdeckung (20) angreifende Feder eine Zugfeder (34) ist, die vorzugsweise aus einer Gummischnur besteht.

9. Sonnenblende nach Anspruch 8, dadurch gekennzeichnet, daß ein Ende der Zugfeder (34) am oberen rückseitigen Randbereich der Abdeckung (20) und das andere Ende spiegelrückseitig am Oberteil (6) befestigt ist, derart, daß sich der Spiegel (19), bei gespannter Zugfeder (34), zwischen den Federsträngen befindet.

## Claims

1. A sun visor for vehicles comprising a plate-shaped visor body (1) having an approximately rectangular contour and formed on one of its two main surfaces with a recess for inserting a casing (5, 6) equipped with a mirror (19) and a lighting device which can be switched on and off, the casing comprising a trough-like bottom part secured to the sun visor body (1) and a top part (6) releasably connected to the bottom part, light sources (12) being installed in the bottom part (5) and the top part (6) being a modular unit and comprising the mirror (19), characterised in that switches (15) for the light sources (12) are installed in the bottom part (5) and the top part (6) has a movable cover (20) for the mirror (19), lamp windows (21, 22) and lead apertures (23) for the switches.

2. A visor according to claim 1, characterised in that the bottom part (5) has catch recesses (17) on two opposite wall sides (8) and the top part (6) has snapfastening lugs (18) engaging in the catch apertures (17).

3. A visor according to claim 1 or 3, characterised in that the lamp windows (21, 22) are disposed immediately above the light sources (12) and a lamp window (21, 22) is constructed as a point light source (36).

4. A sun visor according to any of claims 1 to 3, characterised in that the light sources (12) associated with the lamp windows (21, 22) can be switched on or off independently.

5. A visor according to any of claims 1 to 4, characterised in that the closable cover (20) is guided in reciprocation in lateral grooves (guides 24) in the top part (6) and that the maximum opening width of the cover (20) is limited by an abutment.

6. A visor according to any of claims 1 to 5, characterised in that a spring (34) engages the cover (20) and is tensioned when the cover (20) moves from the open to the closed position, the cover (20) is held in the closed position by a spring-loaded pin (25) lockable in an opening (26) in the cover, and the cover (20) is movable into the open position by the force of the tensioned spring when the spring-loaded pin (25) is pushed back.

7. A visor according to claim 6, characterised in that the cover (20) is equipped with an actuating button (32) movable against the free end of the spring-loaded pin (25).

8. A visor according to claim 6, characterised in that the spring engaging the cover (20) is a tension spring (34) preferably comprising a rubber cord.

9. A visor according to claim 8, characterised in that one end of the tension spring (34) is secured to the top rear edge region of the cover (20) and the other end to the back of the mirror on the top part (6), so that the mirror (19) is between the strands of the spring when the spring (34) is tensioned.

## Revendications

1. Pare-soleil pour véhicules comportant un corps de pare-soleil (1) en forme de plaque de contour sensiblement rectangulaire, qui comporte dans une des ses deux surface principales un évidement, dans lequel est placé un boîtier (5, 6) équipé d'un miroir (19) et d'un dispositif d'éclairage pouvant être allumé ou éteint, lequel boîtier est constitué par une partie inférieure (5) en forme de cuvette ancrée dans le corps de pare-soleil (1) et par une partie supérieure (6) reliée de façon amovible à la précédente, des sources lumineuses (12) étant installées dans la partie inférieure (5) et la partie supérieure (6) réalisée sous forme d'unité modulaire comportant le miroir (19), caractérisé en ce que des interrupteurs (15) pour les sources lumineuses (12) sont installées dans la partie inférieure (5) et en ce que la partie supérieure (6) comporte un couvercle coulissant (20) pour le miroir (19), des fenêtres lumineuses (21, 22) ainsi que des orifices de passage (23) pour les interrupteurs.

2. Pare-soleil selon la revendication 1, caractérisé en ce que la partie inférieure (5) comporte sur deux côtés de paroi (8) en vis-à-vis des évidements d'encliquetage (17) et la partie supérieure (6) comporte des becs d'encliquetage (18) pénétrant dans les évidements d'encliquetage (17).

3. Pare-soleil selon la revendication 1 ou 2, caractérisé en ce que les fenêtres lumineuses (21, 22) sont disposées directement sur les sources lumineuses (12) et en ce qu'une fenêtre lumineuse (21, 22) est réalisée sous forme d'émetteur de rayonnement ponctuel (36).

4. Pare-soleil selon l'une des revendications 1 à 3, caractérisé en ce que les sources lumineuses (12) associées aux fenêtres lumineuses (21, 22) peuvent être mises en circuit et arrêtées indépendamment l'une de l'autre.

5. Pare-soleil selon l'une des revendications 1 à 4, caractérisé en ce que le couvercle coulissant (20) peut se déplacer dans un sens et dans l'autre dans des gorges latérales (guidages 24) de la partie supérieure (6) et en ce que la plus grande ouverture du couvercle (20) est limitée par une butée.

6. Pare-soleil selon l'une des revendications 1 à 5, caractérisé en ce qu'un ressort (34) agit sur le couvercle (20), lequel ressort peut être tendu par le passage du couvercle (20) de la position ouverte à la position fermée, en ce que, dans la position fermée, le couvercle (20) est tenu par un téton (25) assujetti à un ressort et pouvant s'encliqueter dans un orifice (26) de celui-ci, et en ce que le couvercle (20) peut être ramené en position ouverte en repoussant le téton assujetti à un ressort (25) par la force du ressort tendu.

7. Pare-soleil selon la revendication 6, caractérisé en ce que le couvercle (20) est équipé d'un bouton d'actionnement (32) pouvant être déplacé contre l'extrémité libre du téton assujetti à un ressort (25).

8. Pare-soleil selon la revendication 6, caractérisé en ce que le ressort agissant sur le couvercle (20) est un ressort de traction (34) qui est constitué, de préférence par un cordon de caoutchouc.

9. Pare-soleil selon la revendication 8, caractérisé en ce qu'une extrémité du ressort de traction (34) est fixée sur la zone de bord supérieure, du côté arrière, du couvercle (20) et l'autre extrémité, du côté arrière du miroir, sur la partie supérieure (6), de telle sorte que, lorsque le ressort de traction (34) est tendu, le miroir (19) se trouve entre les brins du ressort.

Fig. 1

Fig. 2

Fig. 4

Fig. 3

Fig. 5

Fig. 6